# FASCICULE DE BREVET EUROPEEN

(11) **EP 3 539 685 B1**
(45) Date de publication et mention de la délivrance du brevet: **09.09.2020**
(21) Numéro de dépôt: 19161909.7
(22) Date de dépôt: 11.03.2019
(51) Int. Cl.: B21J 15/04, B21J 15/12, B21J 15/26, B21J 15/36, B25B 23/00, F16B 19/10

(54) **OUTILLAGE ET PROCEDE DE POSE D'UNE FIXATION AVEUGLE**
WERKZEUG UND VERFAHREN ZUM SETZEN EINER BLINDBEFESTIGUNG
TOOL AND METHOD FOR INSTALLING A BLIND FASTENER

(30) Priorité: 13.03.2018 FR 1852169
(43) Date de publication de la demande: 18.09.2019
(73) Titulaire: Lisi Aerospace, 75012 Paris (FR)
(72) Inventeur: LEGER, Jean-Luc, 18110 VASSELAY (FR); BECHARD BOUQUIN, Aurélien, 18110 SAINT MARTIN D'AUXIGNY (FR)
(74) Mandataire: Ipside

(56) Documents cités:
- EP-A2- 0 953 390
- FR-A1- 3 016 417
- US-A1- 2004 022 596
- US-A1- 2014 130 335

## Description

La présente invention se rapporte à un outillage de pose d'une fixation aveugle dans une structure.

On appelle communément fixation « aveugle » une fixation qui peut être installée dans des structures à assembler par une seul côté, dit avant ou accessible, en déformant une partie de la fixation disposée sur le côté arrière, accessible ou non, desdites structures. La déformation s'effectue radialement vers l'extérieur lors d'une étape de traction ou de vissage, pour former un bulbe ou un épanouissement, ladite déformation prenant appui contre le côté arrière. Les structures à assembler sont ainsi maintenues serrées entre une tête de la fixation disposée en appui contre le côté avant, et la partie déformée en appui contre le côté arrière.

Parmi les types de fixations aveugles, il existe un premier type dit « rivet à tirer », comportant une douille et un mandrin cassable reliés ensemble à une extrémité de la fixation, le rivet étant installé en appliquant uniquement au mandrin une force de traction tout en maintenant la douille fixe en translation, jusqu'à rupture du mandrin sous l'application d'un effort de traction prédéterminé. Un deuxième type dit « rivet à visser », comporte une douille taraudée et un mandrin fileté, le rivet étant installé en appliquant uniquement un couple au mandrin tout en maintenant la douille fixe en rotation, jusqu'à rupture du mandrin sous un couple prédéterminé. Un troisième type comprend les écrous aveugles, comportant un écrou taraudé et un mandrin amovible, l'écrou étant installé en vissant le mandrin amovible dans l'écrou, en tirant ou en tournant le mandrin jusqu'à une consigne de traction ou de couple donné, puis en dévissant le mandrin de l'écrou installé. Enfin, un quatrième type dit « tiré-vissé », comprend une vis munie d'une tête et un élément de préhension, et une douille taraudée munie d'une collerette, auxquels une force de traction relative est appliquée pour déplacer la position de la vis par rapport à la douille taraudée et déformer une portion de la douille afin de former un bulbe contre la face arrière de ladite structure. Dans ce dernier type, l'élément de préhension est cassé sous l'application d'un couple prédéterminé. Une telle fixation est par exemple décrite dans la demande FR3016417 de la demanderesse.

FR 3 016 417 A1, sur laquelle le préambule de la revendication 1 est basé, décrit de même un outillage de pose d'une telle fixation.

Un objectif de l'invention est de fournir un outillage de pose manuel de fixations aveugles du type « tiré-vissé ».

Pour cela, l'invention fournit un outillage de pose d'une fixation dans une structure par une face avant de la structure.

La fixation comprend une vis comportant un fût avec une tête et une extrémité filetée, un élément de préhension pouvant être rompu sous l'application d'un couple de rupture prédéterminé et une douille taraudée apte à se déformer radialement vers l'extérieur afin de former un bulbe contre une face arrière de ladite structure.

L'outillage de pose comprend :
- un corps, sensiblement de révolution, s'étendant selon un axe X longitudinal, comprenant à une première extrémité avant une ouverture axiale permettant le passage de l'élément de préhension et de la tête de la fixation,
- un premier fourreau mobile axialement et en rotation dans le corps, apte à entraîner l'élément de préhension de la vis en translation axiale et en rotation autour de l'axe X;
- un deuxième fourreau mobile axialement dans le corps et immobile en rotation, ledit deuxième fourreau étant agencé pour entraîner en translation axiale le premier fourreau;
- un moyen d'entraînement en rotation comprenant un arbre tournant pourvu :
   ∘ d'une première roue libre pouvant entraîner en rotation le premier fourreau dans un premier sens de rotation de l'arbre,
   ∘ d'une deuxième roue libre pouvant entraîner en rotation un élément d'entraînement disposé coaxialement autour de ladite deuxième roue libre dans un deuxième sens de rotation de l'arbre, opposé au premier sens de rotation, l'élément d'entraînement coopérant par une liaison hélicoïdale avec le deuxième fourreau de sorte à déplacer en translation axiale ledit deuxième fourreau.

L'outillage de pose obtenu permet d'installer des fixations aveugles du type « tiré-vissé » avec une architecture simple et robuste mécaniquement, qui ne nécessite que peu d'éléments pour réaliser le mouvement de traction et le mouvement de rotation réalisés successivement pour poser une fixation.

L'outillage de pose d'une fixation selon l'invention présente également de préférence tout ou partie des caractéristiques suivantes, prises seules ou en combinaison techniquement opérables :
- l'élément d'entraînement est une vis filetée, une vis à billes, une vis à rouleaux ou une vis sans fin.
- le premier fourreau comporte des éléments mobiles aptes à coopérer avec la portion de blocage de l'élément de préhension de la fixation pour solidariser dans la direction axiale la fixation avec le premier fourreau.
- une première bague est disposée sur le premier fourreau de sorte à être apte à coulisser entre une première position dans laquelle le mouvement des éléments mobiles est bloqué dans la direction radiale et une deuxième position dans laquelle le mouvement des éléments mobiles est libre dans la direction radiale.
- une deuxième bague est apte à coulisser suivant la direction axiale sur le corps et interfacée avec la première bague pour entraîner la première bague uniquement vers la deuxième position.
- la première roue libre est montée coulissante suivant la direction axiale sur l'arbre tournant.
- la première roue libre est montée sur une troisième bague montée coulissante suivant la direction axiale sur l'arbre tournant.
- un ressort de compression est disposé entre la troisième bague et l'élément d'entraînement.
- un moyen élastique est fixé à une extrémité à l'élément d'entraînement et à une autre extrémité au corps, ce moyen élastique étant mis en tension lors de la rotation de l'arbre dans le deuxième sens et se détendant pour pousser l'élément d'entraînement quand la rotation de arbre tournant est arrêtée et / ou inversée.
- le moyen élastique est un ressort à torsion ou un ressort à spirales.

L'invention concerne également un procédé de pose d'une fixation au moyen d'un outillage de pose conforme à l'invention.

Suivant le procédé il est effectué les étapes de :
- engager l'élément de préhension d'une fixation à poser dans l'ouverture du corps de l'outillage de pose pour solidariser en rotation et en translation la fixation avec le premier fourreau et engager la fixation dans un perçage de la structure, puis ;
- entraîner en rotation l'arbre dans le deuxième sens de rotation pour déplacer le deuxième fourreau en translation axiale, lequel entraîne en translation axiale le premier fourreau dans le sens d'une traction de la vis de la fixation, sur une distance assurant la formation d'un bulbe par déformation de la douille, puis ;
- entraîner en rotation l'arbre dans le premier sens de rotation pour entraîner la vis en rotation jusqu'à un couple de serrage de la vis pour lequel l'élément de préhension se sépare du reste de la vis par rupture au niveau d'une gorge de rupture.

D'autres buts, caractéristiques et avantages de l'invention apparaîtront à la lecture de la description des modes de réalisation de l'invention, description faite en liaison avec les dessins dans lesquels:
- La figure 1 est une vue en coupe d'une fixation aveugle de l'art antérieur du type « tiré-vissé »;
- la figure 2 est une vue en coupe de l'outillage de pose dans une configuration de repos,
- la figure 3 est une vue en coupe de l'outillage de pose et de la fixation de la figure 1 dans une configuration dans laquelle la fixation est insérée dans l'outillage de pose et traverse une structure,
- La figure 4 est une vue en coupe de l'outillage de pose et de la fixation insérée dans une structure lors d'une étape de formation du bulbe;
- La figure 5 est une vue en coupe de l'outillage de pose et de la fixation dans une structure lors d'une étape de vissage,
- La figure 6 est un détail en coupe de l'outillage de pose et de la fixation dans une structure lors d'une étape de rupture de l'élément de préhension de la fixation;
- La figure 7 est un détail en coupe de l'outillage de pose et de l'élément de préhension cassé de la fixation lors d'une étape d'éjection.

Pour faciliter la lecture des dessins, seuls les éléments nécessaires à la compréhension de l'invention ont été représentés. Les mêmes éléments portent les mêmes références d'un dessin à l'autre.

L'attention est attirée sur le fait que toutes les vues en coupe du nez de pose présentées sur les différentes figures ne sont pas réalisées dans un même plan axial. En particulier les vues 2, 3 et 7 sont réalisées dans un premier plan axial et les vues 4, 5 et 6 sont réalisées dans un autre plan axial.

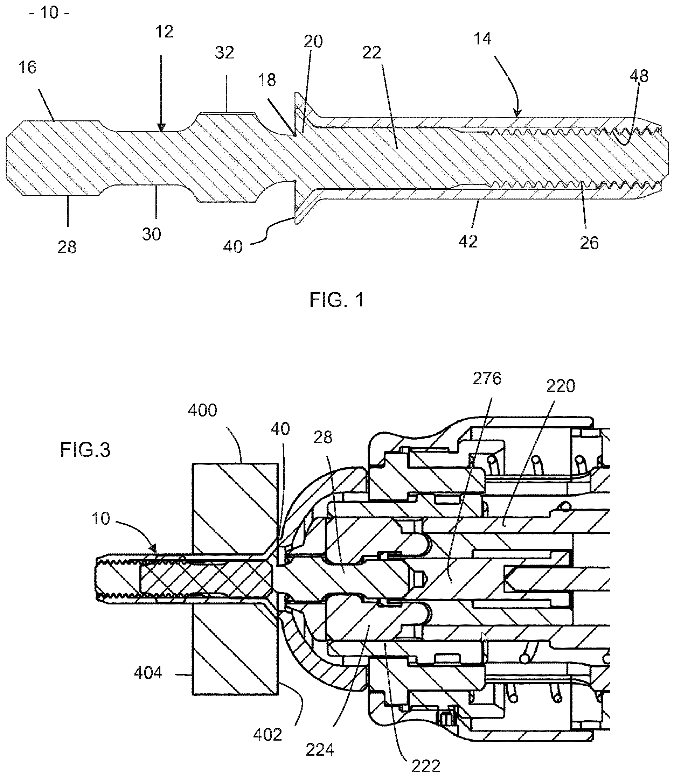

En référence à la figure 1, une fixation aveugle 10 du type « tiré-vissé » à laquelle l'invention s'applique comprend une vis 12 et une douille 14. La vis 12 comprend un élément de préhension 16 apte à être cassé lors de l'installation de la fixation, une gorge de rupture 18, une tête 20 fraisée, un fût cylindrique 22 et une extrémité filetée 26. L'élément de préhension 16 comprend une première portion 28 de préhension sous la forme d'un cylindre, une portion de blocage 30 et une deuxième portion 32 de préhension, comportant des cannelures réparties sur la surface extérieure.

La douille 14 comprend une collerette 40 élargie apte à recevoir la tête 20 fraisée de la vis, et un fût tubulaire 42 comprenant un taraudage 48, disposé à l'extrémité de la douille 14, opposé à la collerette 40. Le filetage de la vis 12 et le taraudage de la douille 14 sont complémentaires. Le fût tubulaire 42 comprend une zone déformable, non matérialisée sur le dessin, de raideur inférieure à la raideur des autres portions, apte à former un bulbe sous l'effet d'une traction.

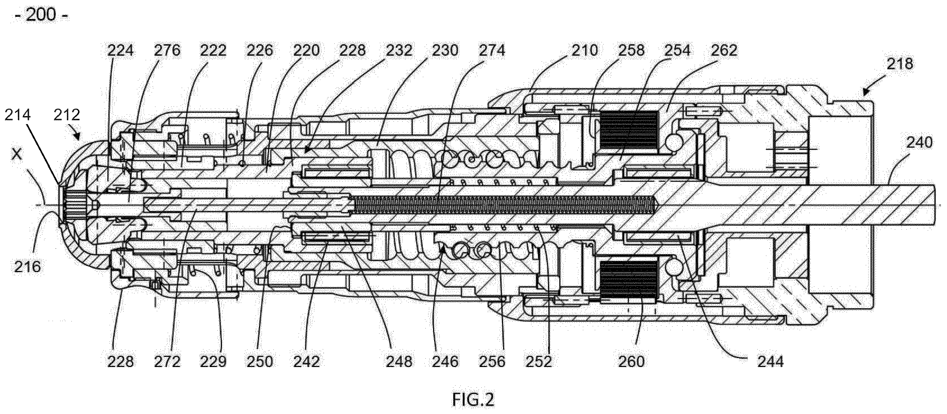

La figure 2 est une vue en coupe d'un nez de pose 200 d'un outillage adapté à poser une fixation aveugle 10 précédemment décrite. Le nez de pose comprend un corps 210 sensiblement de révolution, sensiblement cylindrique, creux s'étendant selon un axe X, comprenant une première extrémité 212 et une deuxième extrémité 218 opposée à la première. Par commodité, dans la suite de la description la première extrémité 212 est appelée extrémité avant et indique la direction « vers l'avant », tandis que la deuxième extrémité est appelée extrémité arrière et indique la direction « vers l'arrière ». Les termes « en translation » et « axialement » sont utilisés de manière équivalente pour désigner un mouvement linéaire selon l'axe X.

L'extrémité avant du corps (210) comporte une surface de contact 214 agencée pour entrer en contact avec la collerette 40 de la douille taraudée, et une ouverture 216 de diamètre suffisant pour permettre le passage de l'élément de préhension 16 et la tête 20 de la vis 12 à l'intérieur dudit corps .

Le corps 210 reçoit en son sein un premier fourreau 220, mobile en rotation et en translation à l'intérieur dudit corps. Le premier fourreau est de forme de révolution sensiblement tubulaire autour de l'axe X du corps. Il s'étend entre une première extrémité proche de l'extrémité avant 212 du corps, et une deuxième extrémité opposée. Une première bague 222 est disposée sur une première portion du premier fourreau 220 adjacente à la première extrémité du premier fourreau. Des éléments 224, répartis autour de l'axe, mobiles dans au moins une composante de la direction radiale sont maintenus à l'intérieur du corps 210 entre l'extrémité avant 212 du corps et le premier fourreau 220. La première bague 222 est mobile axialement sur ladite première portion du premier fourreau, entre une première position dans laquelle les éléments mobiles sont partiellement entourés par la première bague 222 (figure 2) et libres de se déplacer radialement, et une deuxième position dans laquelle les éléments mobiles sont totalement entourés par la première bague 222 (figure 3) qui bloque leur déplacement dans la direction radiale.

Un premier ressort de compression 226 est disposé entre la première bague 222 et un deuxième fourreau 230. Sous l'effet du premier ressort de compression 226, la première bague 222 est poussée axialement vers l'avant. Dans la position de repos de la figure 2, la course de la première bague 222 vers l'avant est limitée par les éléments mobiles 224 dont les extrémités les plus proches de l'avant forment un cône présentant un diamètre extérieur supérieur au diamètre intérieur de la première bague 222.

Une deuxième bague 228 est disposée autour du corps 210, proche de l'extrémité avant 212 dudit corps. La deuxième bague 228 peut coulisser sur le corps vers l'arrière, à l'encontre d'un deuxième ressort de compression 229.

Le deuxième fourreau 230 est logé à l'intérieur du corps 210. Il est mobile axialement à l'intérieur du corps, mais maintenu immobile en rotation. Le deuxième fourreau est de forme de révolution sensiblement tubulaire autour de l'axe X du corps et s'étend entre, à l'avant, une extrémité d'une première portion 232 proche de la deuxième extrémité du premier fourreau 220, et, à l'arrière, une deuxième extrémité opposée. Le deuxième fourreau 230 comprend une surface extérieure de type six ou huit pans engagées dans des surfaces complémentaires du corps 210 pour immobiliser le deuxième fourreau en rotation dans le corps. D'autres dispositifs anti-rotation permettant la translation sont possibles, comme des dispositifs de clavettes, clé ou autres cannelures.

La première portion 232 du deuxième fourreau recouvre une deuxième portion 228 du premier fourreau 220, adjacente à la deuxième extrémité du premier fourreau. Une surface extérieure de la deuxième portion 228 du premier fourreau forme un épaulement externe et une surface interne de la première portion 232 du deuxième fourreau forme une butée, proche de l'extrémité avant de ladite première portion du deuxième fourreau, recevant l'épaulement du premier fourreau. L'épaulement et la butée comprennent des surfaces d'appui complémentaires permettant la transmission d'un mouvement de translation du deuxième fourreau 230 au premier fourreau 220 vers l'extrémité arrière 218 du corps. D'autres moyens d'entraînement en translation du premier fourreau peuvent être utilisés.

Le corps 210 comprend également un moyen d'entraînement apte à entraîner en translation et en rotation le premier fourreau 220, et apte à entraîner en translation le deuxième fourreau 230. Le moyen d'entraînement comprend un arbre 240 s'étendant selon l'axe X entre la deuxième extrémité du premier fourreau 220 et l'extrémité arrière 218 du corps. L'arbre est monté tournant autour d'un axe longitudinal dudit arbre et peut être entraîné en rotation dans les deux sens possibles de rotation autour de son axe. A l'avant, l'arbre est pourvu à une première extrémité d'une première roue libre 242, disposée à une interface avec la deuxième portion 228 du premier fourreau 220. L'arbre comprend à une deuxième extrémité proche de l'extrémité arrière 218 du corps un moyen d'entraînement en rotation (non représenté) pouvant entraîner l'arbre dans un sens de rotation et dans le sens inverse. Une deuxième roue libre 244 est disposée autour de l'arbre 240, agencée axialement entre la première roue libre 242 et le moyen d'entraînement en rotation de l'arbre. Un élément d'entraînement 246 est disposé coaxialement autour de la deuxième roue libre 244.

Chaque roue libre 242, 244 comprend classiquement une bague intérieure et une bague extérieure telle que, dans un sens de rotation, la roue libre tourne librement sans solidariser la bague intérieure avec la bague extérieure - phase dite de roue libre, et dans l'autre sens de rotation la bague intérieure est solidaire de la bague extérieure et transmet un couple à la pièce liée à la bague extérieure.

La première roue libre 242 est agencée de sorte à entraîner en rotation le premier fourreau 220 lors d'une rotation de l'arbre dans un premier sens de rotation. La deuxième roue libre 244 est agencée de sorte à entraîner en rotation l'élément d'entraînement 246 en rotation lors d'une rotation de l'arbre dans un deuxième sens de rotation, inverse du premier sens de rotation. Les roues libres 242 et 244 sont en phase de roue libre dans des sens de rotation opposés. La première roue libre 242 transmet un couple dans le sens de rotation identique au sens de vissage de la vis 12 dans la douille 14.

La première roue libre 242 est montée coulissante sur l'arbre 240 au moyen d'une troisième bague 248 coaxiale avec l'arbre et pouvant coulisser sur l'arbre. La troisième bague 248 et l'arbre 240 sont solidarisées en rotation, par exemple par un six pans ou toute autre forme anti-rotation, ou par tout autre moyen mécanique tel que des systèmes de clavette ou de clé. La troisième bague 248 comprend une butée 250 prenant appui d'une part contre un épaulement interne de la deuxième portion 228 du premier fourreau, et d'autre part contre la première roue libre 242. Un troisième ressort de compression 252 est logé autour de l'arbre 240, entre un épaulement interne de l'élément d'entraînement 246 et la troisième bague 248.

L'élément d'entraînement 246 comprend une première portion 254 disposée coaxialement autour de la deuxième roue libre 244, et une deuxième portion 256 s'étendant coaxialement autour de l'arbre, à distance de l'arbre. Dans cet exemple, la première portion 254 de l'élément d'entraînement comprend une surface externe d'entraînement en rotation, par exemple un huit pans, et la deuxième portion 256 dudit élément d'entraînement comprend une surface extérieure de type vis à billes. La vis à billes coopère avec une surface intérieure du deuxième fourreau 230 de type écrou à billes. Grâce à la liaison hélicoïdale entre l'élément d'entraînement 246 et le deuxième fourreau 230, et du fait que le deuxième fourreau 230 est immobile en rotation dans le corps 210, la rotation de l'élément d'entraînement 246 entraîne la translation du deuxième fourreau 230 vers l'arrière du corps lorsque l'arbre est soumis à une rotation dans le sens de transmission du couple de la deuxième roue libre. Dans ce sens de rotation, la première roue libre 242 est en condition de roue libre, et n'entraîne pas en rotation le premier fourreau.

D'autres types de liaison hélicoïdales entre l'élément d'entraînement et le deuxième fourreau sont possibles, comme les liaisons utilisant des vis / écrous classiques, des vis à rouleaux ou des vis sans fin.

La première portion 254 de l'élément d'entraînement 246 forme une collerette 258 s'étendant radialement vers l'extérieur. Un ressort à spirales 260 est logé dans la direction radiale dans le corps 210 autour de la première portion 254 de l'élément d'entraînement, une extrémité dudit ressort étant fixé à ladite première portion 254, tandis que l'autre extrémité est fixée au corps 210. Le ressort à spirale est contenu dans la direction axiale entre la collerette 258 de la première portion de l'élément d'entraînement et une butée 262 du corps. Le ressort à spirale 260 est resserré sur lui-même lorsque l'arbre est soumis à une rotation dans le sens de rotation de blocage de la deuxième roue libre 244. Le ressort à spirale se détend lorsque l'arbre est soumis à une rotation dans le sens de rotation inverse.

En variante, le ressort à spirale peut être remplacé par un ressort de torsion. Le ressort à spirale est moins encombrant et offre une plus grande latitude de réglage que le ressort à torsion.

L'outil de pose comprend également un éjecteur comprenant une tige 272 dont une extrémité peut coulisser dans l'arbre 240, un quatrième ressort de compression 274 logé dans un espace intérieur de l'arbre 240 et repoussant la tige 272. L'éjecteur comprend également un élément d'appui 276 disposé à une extrémité opposée de la tige 272, qui peut coulisser dans le premier fourreau 220 et pouvant prendre appui contre une surface externe de la première portion 28 de l'élément de préhension 16 de la vis. Dans l'état de repos, dans lequel aucune fixation n'est insérée dans le nez de pose, l'élément d'appui 276 de l'éjecteur est poussé par le quatrième ressort de compression 274 vers l'avant de sorte à se trouver en vis-à-vis de l'ouverture 216 du corps 210.

Le procédé de pose d'une fixation aveugle 10 au moyen du nez de pose 200 va maintenant être décrit, en liaison avec les figures 3 à 7.

Dans une étape préliminaire, un opérateur saisit une fixation 10 dans un état représenté à la figure 1, et l'insère par l'ouverture 216 avant du corps. La portion de préhension 28 de la vis repousse radialement vers l'extérieur les éléments mobiles 224 qui s'encliquètent dans la portion de blocage 30 de la fixation une fois que la première portion de préhension 28 de la vis est complètement insérée dans le nez de pose (figure 3). Les éléments mobiles 224 présentent alors un diamètre extérieur inférieur au diamètre intérieur de la première bague 222, qui est libre de coulisser vers l'avant sous l'action du premier ressort de compression 226, de sorte à emprisonner les éléments mobiles autour de la portion de préhension de la fixation (figure 3) et à bloquer la fixation 10 dans le nez de pose dans la direction axiale.

Quand la première portion 28 de l'élément de préhension est entièrement contenue dans le nez de pose 200, l'élément d'appui 276 de l'éjecteur, poussé vers l'arrière, comprime le quatrième ressort de compression 274 dans l'arbre 240.

La fixation 10 est ensuite insérée dans au moins deux éléments de structure 400 à assembler, présentant une face avant 402, du côté de laquelle la fixation est insérée, et une face aveugle 404 opposée à la face avant. Par simplicité, la structure est représentée globalement sur les figures 3 à 6 sans représenter les éléments qui sont assemblés pour la constituer. La surface de contact 214 du corps repose sur la collerette 40 de la fixation.

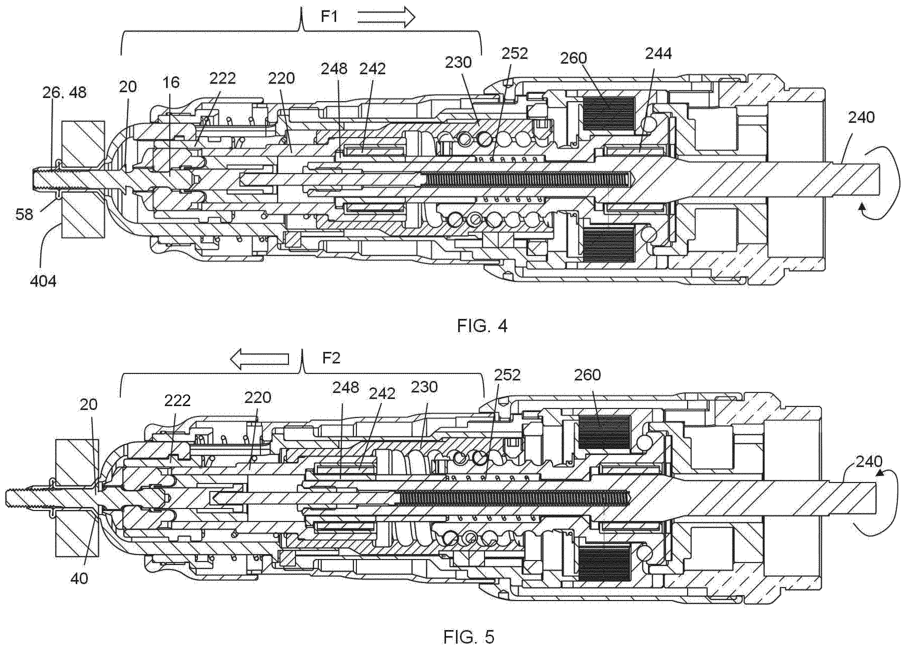

La première étape consiste à former un bulbe contre la face aveugle 404 de la structure. Pour ce faire, l'arbre 240 est entraîné en rotation dans le sens de rotation de la deuxième roue libre 244. Le ressort à spirale 260 est mis en tension, un mouvement de translation est imprimé au deuxième fourreau 230 via la liaison vis / écrou à billes. Le deuxième fourreau 230 recule vers l'arrière (Figure 4 - flèche F1) et entraîne le premier fourreau 220 par l'engagement des surfaces d'appui de l'épaulement du premier fourreau 220 et de la première butée du deuxième fourreau 230, ainsi que la troisième bague 248 disposée autour de l'arbre, entraînant de fait la première roue libre 242 vers l'arrière, et comprimant le troisième ressort de compression 252.

Le premier fourreau 220 et la première bague 222 entraînent vers l'arrière l'élément de préhension 16 de la vis, et donc la portion filetée 26 de la vis et le taraudage 48 de la douille vers la face aveugle 404 de la structure, jusqu'à la formation d'un bulbe 58 dont une face vient en appui contre la face aveugle 404. La tête 20 de la vis 12 est alors contenue dans le corps 210 de l'outil de pose. La surface de contact 214 du corps maintient toujours la douille 14 dans la structure 400 (figure 4).

La deuxième étape consiste à visser la vis 12 dans la douille 14 pour ramener la tête 20 de la vis dans la collerette 40 de la douille. La rotation exercée sur l'arbre 240 est stoppée et un mouvement de rotation inverse est imprimé. Les actions combinées du ressort à spirale 260 et du troisième ressort de compression 252 entraînent en translation le deuxième fourreau 230 et la troisième bague 248 vers l'avant (figure 5, flèche F2), tandis que la rotation de l'arbre dans le sens de rotation de la première roue libre 242 entraîne en rotation le premier fourreau 220 dans le sens de vissage de la vis, en direction de l'avant. Dans ce sens de rotation, la deuxième roue libre 244 est en phase de roue libre et n'entraîne pas en rotation l'élément d'entraînement 246.

La figure 5 illustre la fin de ce mouvement : le premier fourreau 220, le deuxième fourreau 230, la première roue libre 242 et la troisième bague 248 sont revenus dans leurs positions initiales comme représentée en figure 2, la tête 20 de la vis étant de nouveau en appui dans la collerette 40 de la douille.

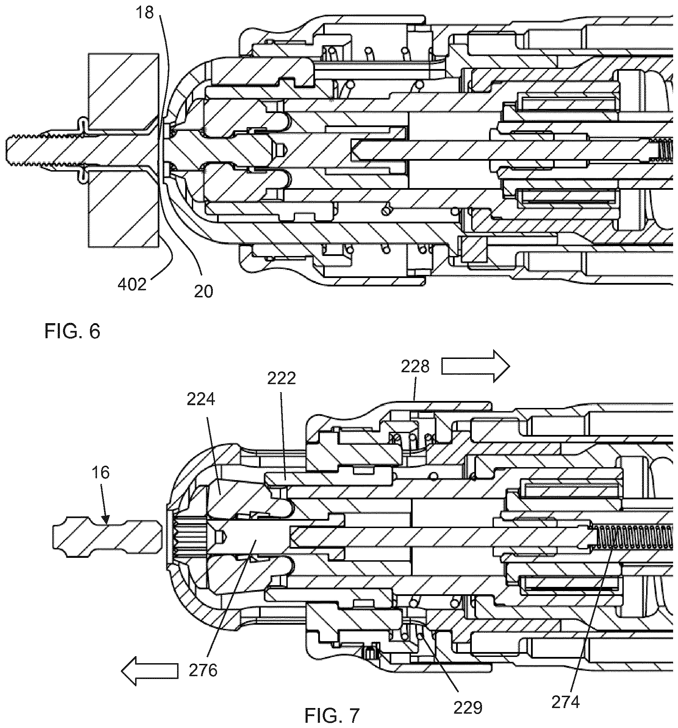

La troisième étape consiste à finaliser l'installation du rivet en cassant l'élément de préhension 16 de la vis en continuant de tourner l'arbre 240 dans le sens de rotation de la première roue libre 242. La gorge de rupture 18 est conçue pour casser au-delà d'un certain couple de torsion assurant le serrage recherché pour la fixation. Elle casse donc une fois le seuil atteint, laissant la tête 20 affleurant à la surface avant 402 de la structure (figure 6).

Pour éjecter l'élément de préhension 16 cassé, l'opérateur saisit la deuxième bague 228 et la tire vers l'arrière du corps. Par un système de clavettes, la première bague 222 est tirée vers l'arrière (figure 7). Ce faisant, la première bague 222 libère l'extrémité avant des éléments mobiles 224 qui sont de nouveau mobiles radialement. La bague 222 ne maintenant plus les éléments mobiles 224 dans la portion de blocage 30 de l'élément de préhension 16, l'élément d'appui 276 de l'éjecteur est poussé vers l'avant sous l'action du quatrième ressort de compression 274, qui éjecte l'élément de préhension 16 hors du nez de pose 200. L'éjecteur repousse également radialement les éléments mobiles, qui reprennent leurs positions initiales de la figure 2, maintenant la première bague 222 dans une position arrière lorsque l'opérateur relâche la deuxième bague 228, et que le deuxième ressort de compression 229 ramène la deuxième bague 228 dans la position initiale de la figure 2. Une autre fixation aveugle peut être installée suivant la même procédure.

Cet outillage de pose manuel peut être utilisé avec tout type de fixation du type « tiré-vissé », en adaptant les éléments mobiles 224 et les moyens de préhension du fourreau 220 à la forme de l'élément de préhension 16 de la vis.

Bien entendu, l'outil de pose 200 peut également installer des fixations à tête protubérante.

## Revendications

1. Outillage de pose d'une fixation (10) dans une structure (400) par une face avant de ladite structure, ladite fixation étant du type comprenant une vis (12) comportant un fût (22) avec une tête (20) et une extrémité filetée (26), un élément de préhension (16) pouvant être rompu sous l'application d'un couple de rupture prédéterminé et une douille (14) taraudée apte à se déformer radialement vers l'extérieur afin de former un bulbe contre une face arrière de ladite structure, ledit outillage de pose comprenant :
- un corps (210), sensiblement de révolution, s'étendant selon un axe X longitudinal, comprenant à une première extrémité avant (212) une ouverture (216) axiale permettant le passage de l'élément de préhension (16) et de la tête (20) de la fixation,
- un premier fourreau (220) mobile axialement et en rotation dans le corps (210), apte à entraîner l'élément de préhension (16) de la vis en translation axiale et en rotation autour de l'axe X;
l'outillage de pose étant **caractérisé en ce qu'**il comprend
- un deuxième fourreau (230) mobile axialement dans le corps (210) et immobile en rotation, ledit deuxième fourreau étant agencé pour entraîner en translation axiale le premier fourreau (220);
- un moyen d'entraînement en rotation comprenant un arbre (240) tournant pourvu :
∘ d'une première roue libre (242) pouvant entraîner en rotation le premier fourreau (220) dans un premier sens de rotation de l'arbre,
∘ d'une deuxième roue libre (244) pouvant entraîner en rotation un élément d'entraînement (246) disposé coaxialement autour de ladite deuxième roue libre dans un deuxième sens de rotation de l'arbre, opposé au premier sens de rotation, l'élément d'entraînement (246) coopérant par une liaison hélicoïdale avec le deuxième fourreau (230) de sorte à déplacer en translation axiale ledit deuxième fourreau.

2. Outillage de pose d'une fixation selon la revendication 1, dans lequel l'élément d'entraînement (246) est une vis filetée, une vis à billes, une vis à rouleaux ou une vis sans fin.

3. Outillage de pose d'une fixation selon la revendication 1 ou 2, dans lequel le premier fourreau (220) comporte des éléments mobiles (224) aptes à coopérer avec la portion de blocage (30) de l'élément de préhension (16) de la fixation (10) pour solidariser dans la direction axiale ladite fixation avec ledit premier fourreau.

4. Outillage de pose d'une fixation selon la revendication 3, comprenant une première bague (222) disposée sur le premier fourreau (220) de sorte à être apte à coulisser entre une première position dans laquelle le mouvement des éléments mobiles (224) est bloqué dans la direction radiale et une deuxième position dans laquelle le mouvement desdits éléments mobiles est libre dans la direction radiale.

5. Outillage de pose d'une fixation selon la revendication 4, comprenant une deuxième bague (228) apte à coulisser suivant la direction axiale sur le corps (210) et interfacée avec la première bague (222) pour entraîner ladite première bague uniquement vers la deuxième position.

6. Outillage de pose d'une fixation selon la revendication 1, dans lequel la première roue libre (242) est montée coulissante suivant la direction axiale sur l'arbre (240).

7. Outillage de pose d'une fixation selon la revendication 6, dans lequel la première roue libre (242) est montée sur une troisième bague (248) montée coulissante suivant la direction axiale sur l'arbre (240).

8. Outillage de pose d'une fixation selon la revendication 7, dans lequel un ressort de compression (252) est disposé entre la troisième bague (248) et l'élément d'entraînement (246).

9. Outillage de pose d'une fixation selon la revendication 1 ou 2, comprenant un moyen élastique fixé à une extrémité à l'élément d'entraînement (246) et à une autre extrémité au corps (210), ledit moyen élastique étant mis en tension lors de la rotation de l'arbre (240) dans le deuxième sens et se détendant pour pousser ledit élément d'entraînement quand la rotation dudit arbre est arrêtée et / ou inversée.

10. Outillage de pose d'une fixation selon la revendication 9, dans lequel le moyen élastique est un ressort à torsion ou un ressort à spirales.

11. Procédé de pose d'une fixation (10) au moyen d'un outillage de pose conforme à l'une des revendications précédentes, lequel procédé comporte les étapes de :
- engager l'élément de préhension (16) d'une fixation (10) à poser dans l'ouverture (216) du corps (210) de l'outillage de pose pour solidariser en rotation et en translation ladite fixation avec le premier fourreau (220) et engager la fixation dans un perçage de la structure (400), puis ;
- entraîner en rotation l'arbre (240) dans le deuxième sens de rotation pour déplacer le deuxième fourreau (230) en translation axiale, lequel entraîne en translation axiale le premier fourreau (220) dans le sens d'une traction de la vis (12) de la fixation, sur une distance assurant la formation d'un bulbe par déformation de la douille (14), puis ;
- entraîner en rotation l'arbre (240) dans le premier sens de rotation pour entraîner la vis (12) en rotation jusqu'à un couple de serrage de ladite vis pour lequel l'élément de préhension (16) se sépare du reste de ladite vis par rupture au niveau d'une gorge de rupture (18).

## Patentansprüche

1. Werkzeug zum Setzen einer Befestigung (10) in einer Struktur (400) über eine Vorderseite der Struktur, wobei die Befestigung vom Typ ist, der eine Schraube (12) umfasst, die einen Schaft (22) mit einem Kopf (20) und einem Gewindeende (26) beinhaltet, ein Greifelement (16), das durch Anlegen eines vorbestimmten Bruchmoments abgebrochen werden kann, und eine Gewindehülse (14), die imstande ist, sich radial nach außen zu verformen, um einen Wulst gegen eine Rückseite der Struktur zu bilden, wobei das Werkzeug zum Setzen umfasst:
- einen im Wesentlichen Rotationskörper (210), der sich entlang einer Längsachse X erstreckt, ein erstes vorderes Ende (212) umfassend, eine axiale Öffnung (216), die den Durchgang des Greifelements (16) und des Kopfes (20) der Befestigung ermöglicht,
- eine erste, axial und in dem Körper (210) drehbewegliche Pinole (220), die imstande ist, das Greifelement (16) der Schraube in axialer Translation und in Drehung um die Achse X anzutreiben;
wobei das Werkzeug zum Setzen **dadurch gekennzeichnet ist, dass** es umfasst
- eine zweite, axial in dem Körper (210) bewegliche und drehfeste Pinole (230), wobei die zweite Pinole angeordnet ist, um die erste Pinole (220) in axialer Translation anzutreiben;
- ein Drehantriebsmittel, umfassend eine drehende Welle (240), versehen:
∘ mit einem ersten Freilauf (242), der die erste Pinole (220) in einer ersten Drehrichtung der Welle in Drehung antreiben kann,
∘ mit einem zweiten Freilauf (244), der ein Antriebselement (246), das koaxial um den zweiten Freilauf angeordnet ist, in einer zweiten Drehrichtung der Welle, die entgegengesetzt zur ersten Drehrichtung ist, in Drehung antreiben kann, wobei das Antriebselement (246) durch eine schrägverzahnte Verbindung mit der zweiten Pinole (230) zusammenwirkt, um die zweite Pinole in axialer Translation zu verschieben.

2. Werkzeug zum Setzen einer Befestigung nach Anspruch 1, wobei das Antriebselement (246) eine Gewindeschraube, eine Kugelrollspindel, eine Rollenspindel oder eine Schnecke ist.

3. Werkzeug zum Setzen einer Befestigung nach Anspruch 1 oder 2, wobei die erste Pinole (220) bewegliche Elemente (224) beinhaltet, die imstande sind, mit dem Blockierungsabschnitt (30) des Greifelements (16) der Befestigung (10) zusammenzuwirken, um die Befestigung in der axialen Richtung fest mit der ersten Pinole zu verbinden.

4. Werkzeug zum Setzen einer Befestigung nach Anspruch 3, umfassend einen ersten Ring (222), der auf der ersten Pinole (220) angeordnet ist, um imstande zu sein, zwischen einer ersten Position, in der die Bewegung der beweglichen Elemente (224) in der radialen Richtung blockiert ist, und einer zweiten Position, in der die Bewegung der beweglichen Elemente in der radialen Richtung frei ist, zu gleiten.

5. Werkzeug zum Setzen einer Befestigung nach Anspruch 4, umfassend einen zweiten Ring (228), der imstande ist, entlang der axialen Richtung auf dem Körper (210) zu gleiten, und eine Schnittstelle mit dem ersten Ring (222) aufweist, um den ersten Ring nur zur zweiten Position anzutreiben.

6. Werkzeug zum Setzen einer Befestigung nach Anspruch 1, wobei der erste Freilauf (242) entlang der axialen Richtung auf der Welle (240) gleitend montiert ist.

7. Werkzeug zum Setzen einer Befestigung nach Anspruch 6, wobei der erste Freilauf (242) auf einem dritten Ring (248) montiert ist, der entlang der axialen Richtung auf der Welle (240) gleitend montiert ist.

8. Werkzeug zum Setzen einer Befestigung nach Anspruch 7, wobei eine Druckfeder (252) zwischen dem dritten Ring (248) und dem Antriebselement (246) angeordnet ist.

9. Werkzeug zum Setzen einer Befestigung nach Anspruch 1 oder 2, ein elastisches Mittel umfassend, das an einem Ende an dem Antriebselement (246), und an einem anderen Ende an dem Körper (210) fixiert ist, wobei das elastische Mittel beim Drehen der Welle (240) in der zweiten Richtung in Spannung versetzt wird, und sich entspannt, um das Antriebselement anzuschieben, wenn die Drehung der Welle angehalten und/oder umgekehrt wird.

10. Werkzeug zum Setzen einer Befestigung nach Anspruch 9, wobei das elastische Mittel eine Torsionsfeder oder eine Spiralfeder ist.

11. Verfahren zum Setzen einer Befestigung (10) anhand eines Werkzeugs zum Setzen nach einem der vorstehenden Ansprüche, wobei das Verfahren die folgenden Schritte beinhaltet:
- Einführen des Greifelements (16) einer zu setzenden Befestigung (10) in die Öffnung (216) des Körpers (210) des Werkzeugs zum Setzen, um die Befestigung mit der ersten Pinole (220) dreh- und translationsfest zu verbinden und Einführen der Befestigung in eine Bohrung der Struktur (400), danach;
- Antreiben in Drehung der Welle (240) in der zweiten Drehrichtung zum Verschieben der zweiten Pinole (230) in axialer Translation, welche die erste Pinole (220) in axialer Translation in die Richtung eines Zugs der Schraube (12) der Befestigung über eine Distanz antreibt, die für die Bildung eines Wulstes durch Verformen der Hülse (14) sorgt, danach;
- Antreiben in Drehung der Welle (240) in der ersten Drehrichtung, um die Schraube (12) in Drehung bis zu einem Anzugsmoment der Schraube anzutreiben, bei dem sich das Greifelement (16) vom Rest der Schraube durch Abbrechen im Bereich der Brechnut (18) trennt.

## Claims

1. Tool for installing a fastener (10) in a structure (400) through a front face of said structure, said fastener being of the type comprising a screw (12) including a shank (22) with a head (20) and a threaded end (26), a gripping element (16) breakable under the application of a predetermined breaking torque and a tapped socket (14) capable of deforming radially outwards in order to form a bulb against a rear face of said structure, said installation tool comprising:
- a body (210), substantially of revolution, extending along a longitudinal axis X, comprising at a first front end (212), an axial opening (216) enabling the passage of the gripping element (16) and the head (20) of the fastener,
- a first sheath (220) axially mobile and in rotation in the body (210), capable of driving the gripping element (160) of the screw in axial translation and in rotation about the axis X;
the installation tool being **characterised in that** it comprises:
- a second sheath (230) axially mobile in the body (210) and immobile in rotation, said second sheath being arranged to drive the first sheath (220) in axial translation;
- a means for driving in rotation comprising a rotating shaft (240) provided with:
∘ a first free wheel (242) capable of driving in rotation the first sheath (220) in a first direction of rotation of the shaft,
∘ a second free wheel (244) capable of driving in rotation a drive element (246) disposed coaxially around said second free wheel in a second direction of rotation of the shaft, opposite the first direction of rotation, the drive element (246) cooperating through a helical connection with the second sheath (230) so as to move said second sheath in axial translation.

2. Tool for installing a fastener according to claim 1, wherein the drive element (246) is a threaded screw, a ball screw, a roller screw or a worm screw.

3. Tool for installing a fastener according to claim 1 or 2, wherein the first sheath (220) includes mobile elements (224) capable of cooperating with the blocking portion (30) of the gripping element (16) of the fastener (10) to secure in the axial direction said fastener with said first sheath.

4. Tool for installing a fastener according to claim 3, comprising a first ring (222) disposed on the first sheath (220) so as to be capable of sliding between a first position wherein the movement of the mobile elements (224) is blocked in the radial direction and a second position wherein the movement of said mobile elements is free in the radial direction.

5. Tool for installing a fastener according to claim 4, comprising a second ring (228) capable of sliding along the axial direction on the body (210) and interfaced with the first ring (222) to drive said first ring only towards the second position.

6. Tool for installing a fastener according to claim 1, wherein the first free wheel (242) is mounted slidingly along the axial direction on the shaft (240).

7. Tool for installing a fastener according to claim 6, wherein the first free wheel (242) is mounted on a third ring (248) mounted slidingly along the axial direction on the shaft (240).

8. Tool for installing a fastener according to claim 7, wherein a compression spring (252) is disposed between the third ring (248) and the drive element (246).

9. Tool for installing a fastener according to claim 1 or 2, comprising an elastic means fastened at an end to the drive element (246) and at another end to the body (210), said elastic means being tensioned during the rotation of the shaft (240) in the second direction and loosening to push said drive element when the rotation of said shaft is stopped and/or inverted.

10. Tool for installing a fastener according to claim 9, wherein the elastic means is a torsion spring or a spiral spring.

11. Method for installing a fastener (10) by means of an installation tool according to one of the preceding claims, which method includes the steps of:
- engaging the gripping element (16) of a fastener (10) to be installed in the opening (216) of the body (210) of the installation tool to secure in rotation and in translation said fastener with the first sheath (220) and engaging the fastener in a boring of the structure (400), then;
- driving in rotation the shaft (240) in the second direction of rotation to move the second sheath (230) in axial translation, which drives in axial translation the first sheath (220) in the direction of a traction of the screw (12) of the fastener, over a distance ensuring the formation of a bulb by deformation of the socket (14), then;
- driving in rotation the shaft (240) in the first direction of rotation to drive the screw (12) in rotation up to a clamping torque of said screw for which the gripping element (16) separates from the remainder of said screw by breaking at a breaking groove (18).
